Europäisches Patentamt

(19) European Patent Office    (11) Publication number:    **0 063 162**

Office européen des brevets    **B1**

(12)    **EUROPEAN PATENT SPECIFICATION**

(45) Date of publication of patent specification: **24.07.85**    (51) Int. Cl.⁴: **H 02 K 1/16, H 02 K 1/18**

(21) Application number: **81902962.0**

(22) Date of filing: **28.10.81**

(86) International application number:
**PCT/JP81/00309**

(87) International publication number:
**WO 82/01793 27.05.82 Gazette 82/14**

(54) **INDUCTION MOTOR.**

(30) Priority: **28.10.80 JP 150060/80**

(43) Date of publication of application:
**27.10.82 Bulletin 82/43**

(45) Publication of the grant of the patent:
**24.07.85 Bulletin 85/30**

㊼ Designated Contracting States·
**DE FR GB**

(56) References cited:
**FR-A- 723 166**
**FR-A-1 452 976**
**JP-Y-13 003 131**
**JP-Y-15 002 596**
**US-A-2 876 371**
**US-A-3 221 195**
**US-A-4 085 347**

(73) Proprietor: **FANUC LTD**
**3580, Shibokusa Aza-Komanba Oshino-mura**
**Minamitsuru-gun Yamanashi 401-05 (JP)**

(72) Inventor: **OYAMA, Shigeaki**
**939-82, Katakura-cho Hachioji-shi**
**Tokyo 192 (JP)**
Inventor: **NAKAMURA, Kosei**
**1-2-8, Asahigaoka Hino-shi**
**Tokyo 191 (JP)**
Inventor: **HAYASHI, Yoshiyuki**
**3-11-4, Tamadaira Hino-shi**
**Tokyo 191 (JP)**
Inventor: **KOYOSHIDA, Shigeru**
**1-7-1, Honmachi Omuta-shi**
**Fukuoka 836 (JP)**

(74) Representative: **Blumbach Weser Bergen**
**Kramer Zwirner Hoffmann Patentanwälte**
**Radeckestrasse 43**
**D-8000 München 60 (DE)**

EP 0 063 162 B1

## Description

The present invention relates to an induction motor, more particularly to an induction motor which comprises a stator in which support bars consisting of nonmagnetic metal are welded.

US—A—2 876 361 discloses an induction motor in which stators are formed by inserting and holding a stator core, consisting of piled steel plates, between the end plates and welding support bars along the external surface of the piled steel plates. The conventional induction motor of this type has used magnetic metal material such as carbon steel for said support bars.

Induction motors of the above-mentioned structure, however, suffer from the problem that the rotating magnetic field generated in the stator and passing through the inside of the support bars generates an electromotive force in the support bars, thereby causing current to flow in the closed circuit made up of the support bars and the end plates and thereby resulting in power loss.

The main object of the present invention is to solve the above-mentioned problem of the prior art and provide an induction motor able to decrease the current flowing between the support bars and the end plates in the stator and, therefore, able to decrease power loss.

The present invention provides an induction electric motor having a stator, which comprises stator windings, a stator core, which comprises a pair of end plates and piled steel plates inserted and held between said pair of end plates and which has grooves formed along the axial direction and on the outer surface thereof, and support bars which are made of metal and which are mated with said grooves.

According to the present invention, such an induction motor is characterized in that the support bars are made of non-magnetic metal and welded to the stator core.

In the following, a specific embodiment of the invention will be described making reference to the accompanying drawings, in which

Fig. 1 illustrates a structure of an induction motor in accordance with one embodiment of the present invention;

Fig. 2 illustrates a perspective view of a stator of the induction motor of Fig. 1; and

Fig. 3 illustrates a front view of the stator of Fig. 2 seen in the axial direction.

### Best mode for carrying out the invention

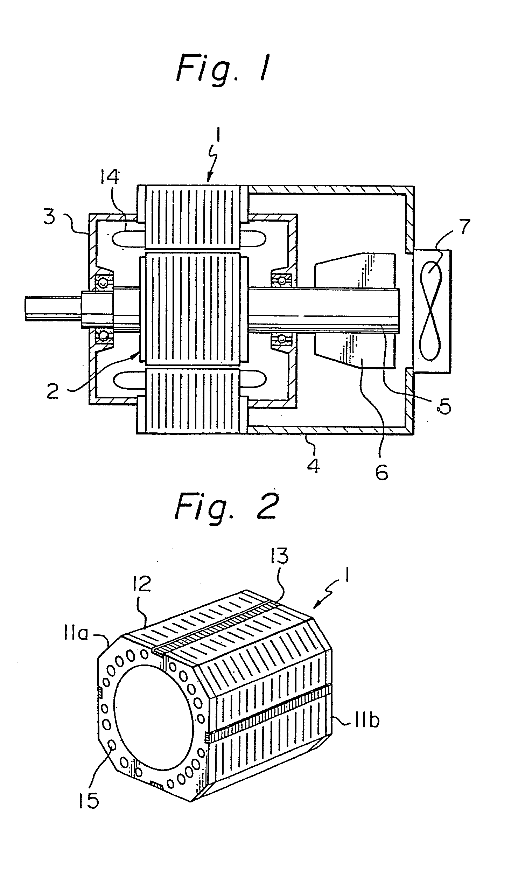

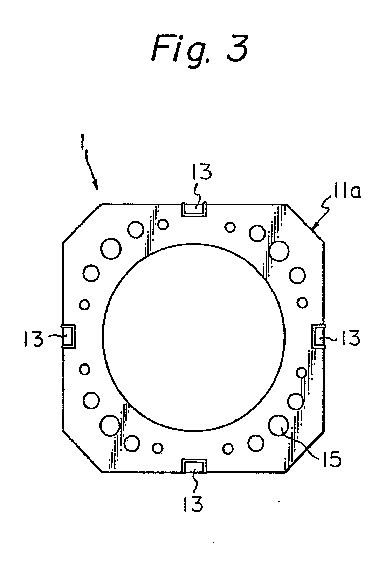

An induction motor in accordance with one embodiment of the present invention is illustrated in Fig. 1. A stator 1 of the induction motor of Fig. 1 is illustrated in Fig. 2 and Fig. 3. The induction motor of Fig. 1 comprises a stator 1, a rotator 2, a rotator cover 3, an end portion cover 4, a heat pipe shaft 5, cooling fins 6, and a fan 7.

As shown in Fig. 2, in the stator 1, a stator core 12 consisting of piled steel plates is inserted and held between two end plates 11a and 11b. On the external surface of the stator 1, i.e., on the end plates 11a, 11b and the stator core 12, grooves are formed along the stator axial direction. In these grooves, support bars 13 consisting of non-magnetic stainless steel are mated. The support bars 13 are welded with the stator core 12, as shown in Fig. 3. In the stator 1, vent holes 15 for cooling are formed along the axial direction.

When passing current through stator windings 14 and generating a rotating magnetic field in the stator core 12, the magnetic flux induced by the magnetic field passes through mainly the gap between the rotator and the stator and through the inside of the stator. Since the stator core has an extremely high magnetic permeability, only extremely little leakage magnetic flux passes through the space around the stator 1 and the inside of the support bars of nonmagnetic material. Accordingly, the induction current generated inside the support bars by the rotating magnetic field generated in the stator is extremely small, therefore power loss due to the above-mentioned induction current is also extremely small.

Though the above-mentioned embodiment of the present invention uses nonmagnetic stainless steel for the support bars 13, other nonmagnetic materials, such as brass or copper, may also be used.

According to the present invention, the current flowing between the support bars and the end plates in the stator can be decreased, therefore, power loss in the induction motor can be decreased.

## Claims

1. An induction electric motor having a stator, which comprises stator windings (14), a stator core (12), which comprises a pair of end plates (11a, 11b) and piled steel plates inserted and held between said pair of end plates (11a, 11b) and which has grooves formed along the axial direction and on the outer surface thereof, and support bars which are made of metal and which are mated with said grooves, characterized in that the support bars (13) are made of non-magnetic metal and welded to the stator core (12).

2. An induction electric motor according to claim 1, wherein said support bars are made of nonmagnetic stainless steel.

## Patentansprüche

1. Elektrischer Induktionsmotor mit einem Stator, der Statorwicklungen (14) aufweist, einen Statorkern (12), der ein Paar Endplatten (11a, 11b) und zwischen das Paar von Endplatten (11a, 11b) gesetzte und dort gehaltene, aufeinandergestapelte Stahlplatten aufweist und der ferner Nuten besitzt, die längs der Axialrichtung und auf seiner äußeren Oberfläche ausgebildet sind, und Trägerstangen, die aus Metall bestehen und an die Nuten angepaßt sind, dadurch gekennzeichnet, daß die Trägerstangen (13) aus nicht-magnetischem Metall bestehen und an den Statorkern (12) angeschweißt sind.

2. Induktionsmotor nach Anspruch 1, bei dem die Trägerstangen aus nicht-magnetischem, rostfreiem Stahl bestehen.

**Revendications**

1. Moteur électrique à induction dont le stator comporte des enroulements statoriques (14), un noyau statorique (12) qui est constitué d'une paire de disques extrêmes (11a, 11b) et d'un empilage de disques de tôle disposé et maintenu entre les disques extrêmes (11a, 11b), la surface extérieure du noyau statorique présentant des rainures axiales, ainsi que des barres de support métalliques adaptées aux rainures, caractérisé en ce que les barres de support (13) sont en métal amagnétique et sont soudées au noyau statorique (12).

2. Moteur électrique à induction selon la revendication 1, dans lequel lesdites barres de support sont en acier inoxydable amagnétique.

## Fig. 1

## Fig. 2

# Fig. 3